# EUROPÄISCHE PATENTSCHRIFT

(11) **EP 0 992 385 B1**
(45) Veröffentlichungstag und Bekanntmachung des Hinweises auf die Patenterteilung: **13.11.2002**
(21) Anmeldenummer: 99118931.7
(22) Anmeldetag: 25.09.1999
(51) Int. Cl.: B60K 15/035

(54) **Kraftstoffversorgungsanlage**
Fuel supply system
Système d'alimentation en carburant

(30) Priorität: 07.10.1998 DE 19846059
(43) Veröffentlichungstag der Anmeldung: 12.04.2000
(73) Patentinhaber: BENTELER AG, D-33104 Paderborn (DE)
(72) Erfinder: Streubel, Wolfgang, Dipl.-Ing., 32756 Detmold (DE); Töpker, Dieter, Dr.Dipl.-Ing., 33100 Paderborn (DE); Ewerszumrode, Andreas, Dr.Dipl.-Ing., 33100 Paderborn (DE)
(74) Vertreter: Ksoll, Peter, Dr.-Ing.

(56) Entgegenhaltungen:
- EP-A- 0 026 727
- EP-A- 0 588 420
- US-A- 4 718 568

## Beschreibung

Die Erfindung betrifft eine Kraftstoffversorgungsanlage für Automobile gemäß den Merkmalen im Oberbegriff des Anspruchs 1.

Wesentlicher Bestandteil einer Kraftstoffversorgungsanlage ist der Kraftstoffbehälter, in dem der Kraftstoff zur Versorgung der Verbrennungskraftmaschine mitgeführt wird. An den Kraftstoffbehälter ist ein Einfüllrohr zur Betankung sowie mindestens eine Betriebsbelüftung und eine Betankungsbelüftung angeschlossen. Kraftstoffbehälter gibt es in Ausführungen aus Metall und aus Kunststoff.

Das beim Betrieb der Verbrennungskraftmaschine aus dem Kraftstoffbehälter entnommene Kraftstoffvolumen muß zur Vermeidung einer Druckdifferenz durch Luft aufgefüllt werden. Dies erfolgt über die Betriebsbelüftung. Hierzu sind am Kraftstoffbehälter eine oder mehrere Betriebsbelüftungsleitungen (Schläuche, Rohre) angebracht, die den Kraftstoffbehälter mit der Umgebung verbinden. Dies erfolgt in der Regel über einen zwischengeschalteten Aktivkohlefilter, der Benzindämpfe neutralisiert.

Außer der Betriebsbelüftung ist an einem Kraftstoffbehälter eine Betankungsbelüftung angebracht. Diese aus ein oder mehreren Leitungen (Schläuche, Rohre) bestehende Belüftung bzw. Entlüftung hat die Aufgabe, das bei der Betankung durch den einströmenden Kraftstoff verdrängte Gasvolumen aus dem Kraftstoffbehälter abzuleiten. In der Regel werden die verdrängten Gase in einem Aktivkohlefilter neutralisiert und in die Umgebung abgeleitet.

Bei Kraftstoffversorgungsanlagen üblicher Bauart sind die einzelnen Betriebsbelüftungsleitungen und die Betankungsbelüftungsleitungen außerhalb des Kraftstoffbehälters einzeln geführt. Für jede Leitung ist daher ein separater Anschluss an den Kraftstoffbehälter erforderlich mit einer Öffnung in der Wand des Kraftstoffbehälters. Eine weitere Anschlussöffnung ist für das Einfüllrohr erforderlich. Dies ist fertigungstechnisch aufwendig. Ferner sind an die Dichtheit der Anschlüsse hohe Anforderungen zu stellen, um die Betriebssicherheit der Kraftstoffversorgungsanlage zu gewährleisten.

Die Anschluss- bzw. Dichtstellen sind zudem potentielle Schwachpunkte für ein Entweichen von Kraftstoffgasen durch Permeation. Hierbei diffundieren Kraftstoffgase durch das Dichtungsmaterial.

Dieser unerwünschte Vorgang tritt auch an den Leitungen auf, und zwar sowohl an den Leitungen für die Betriebsbelüftung und die Betankungsbelüftung als auch am Einfüllrohr. In diesem Zusammenhang ist es nachteilig, dass an den Leitungen eine große äußere Leitungsoberfläche vorhanden ist, über die Gas hindurch diffundieren kann und aus dem Inneren der Kraftstoffversorgungsanlage in die Umwelt gelangt.

Zur Reduzierung der Permeation einer Kraftstoffversorgungsanlage werden üblicherweise hochwertige Werkstoffe sowie aufwendige Dichtungssysteme verwendet.

Aus der EP 0 588 420 A2 sowie der EP 0 026 727 A2 ist es bekannt, bei Belüftungssystemen für Kraftstofftanks die Be- und Entlüftungsleitungen durch eine gemeinsame Öffnung aus dem Kraftstofftank herauszuführen. Auch das Kraftstoffeinfüllrohr kann so konfiguriert sein, dass es gleichzeitig eine Be- und Entlüftungsfunktion hat.

Der Erfindung liegt die Aufgabe zugrunde, eine Kraftstoffversorgungsanlage fertigungs- und anwendungstechnisch zu verbessern und insbesondere die Permeation zu vermindern.

Die Lösung dieser Aufgabe besteht nach der Erfindung in den Merkmalen des Anspruchs 1.

Danach sind die Betriebsbelüftung und/oder die Betankungsbelüftung Bestandteil einer Mehrkanalleitung mit integriertem Ausgleichsbehältnis. Es werden eine oder mehrere Leitungen (Betriebs-, Betankungsbelüftung) zusammen innerhalb der Mehrkanalleitung geführt. Die Mehrkanalleitung kann hierbei die Funktion einer Betriebsbelüftung oder die Funktion einer Betankungsbelüftung übernehmen.

Die Durchbrüche bzw. Anschlussstellen im Kraftstoffbehälter und somit die Dichtstellen sind minimiert, wobei die sonst vorhandenen Einzelöffnungen für Betriebs- und Betankungsbelüftungen auf eine einzige zentrale Öffnung reduziert sind.

Des Weiteren ist es vorteilhaft, dass für die innen in der Mehrkanalleitung verlegten Leitungen weniger hochwertige Materialien verwendet werden können. Eine besondere Permeationsdichtheit ist bei diesen Leitungen nicht erforderlich. Lediglich die Mehrkanalleitung, deren Mantelfläche mit der Umwelt in direktem Kontakt steht, muss aus höherwertigen diffusionsfesten Materialien bestehen. Es bietet sich hier die Verwendung von Metallrohren an.

In die Mehrkanalleitung ist ein Ausgleichsbehältnis integriert. Dieses ist vorzugsweise durch eine radiale Aufweitung der Mehrkanalleitung geschaffen. Dies ist hydroformtechnisch rationell möglich.

Das Ausgleichsbehältnis schafft ein Ausgleichsvolumen für die thermische Ausdehnung des Kraftstoffs im Kraftstoffbehälter. Demzufolge ist es möglich, den Kraftstoffbehälter vollständig zu füllen. Neben der Funktion als Dehnungsausgleicher können im Ausgleichsbehältnis auch Flüssigkeits- bzw. Kraftstofftröpfchen abgeschieden werden, welche im Gasvolumenstrom mitgeführt oder mitgerissen werden.

Eine besonders vorteilhafte Ausführungsform des grundlegenden Erfindungsgedankens besteht nach den Merkmalen des Anspruchs 2 darin, dass auch das Einfüllrohr in die Mehrkanalleitung eingegliedert ist.

Hierdurch wird die Anzahl der erforderlichen Öffnungen im Kraftstoffbehälter weiter reduziert und die Dichtheit gesteigert.

Zweckmäßigerweise ist in die Mehrkanalleitung ein Verschiebungsausgleicher integriert, wie dies Anspruch 3 vorsieht. Dieser übernimmt eine Entkopplungsfunktion. Hierdurch können im Betrieb auftretende Verschiebungen, z.B. infolge von Relativverschiebungen bei einem Crash oder durch temperaturbedingte Längenausdehnungen, kompensiert werden. Die Vorteile der Erfindung kommen besonders bei solchen Kraftstoffversorgungsanlagen zur Geltung mit mehrkammerigen Kraftstoffbehältern, bei denen jede Kraftstoffkammer mit einer Betriebsbelüftung ausgerüstet ist.

Die Funktion einer Betriebsbelüftungsleitung kann auch durch die Mehrkanalleitung übernommen werden. Hierbei erfolgt die Belüftung über den freien Querschnitt im Ringraum zwischen den übrigen in der Mehrkanalleitung verlegten Leitungen.

Eine Kraftstoffversorgungsanlage mit einer Mehrkanalleitung ist in den Figuren 1-3 dargestellt.

Die Erfindung ist durch das in den Figuren 4-7 dargestellte Ausführungsbeispiel näher erläutert. Es zeigen:
- Figur 1: in perspektivischer Darstellungsweise eine Kraftstoffversorgungsanlage;
- Figur 2: in vergrößerter Darstellung den Ausschnitt II der Figur 1;
- Figur 3: ebenfalls in vergrößerter Darstellung den Ausschnitt III der Figur 1;
- Figur 4: eine erfindungsgemäße Ausführungsform einer Kraftstoffversorgungsanlage;
- Figur 5: in vergrößerter Darstellung den Ausschnitt V der Figur 4;
- Figur 6: einen anderen Ausschnitt aus der Mehrkanalleitung gemäß Figur 4 und
- Figur 7: den Ausschnitt VII der Figur 4 mit der Darstellung des kraftstoffbehälterseitigen Anschlusses einer Mehrkanalleitung.

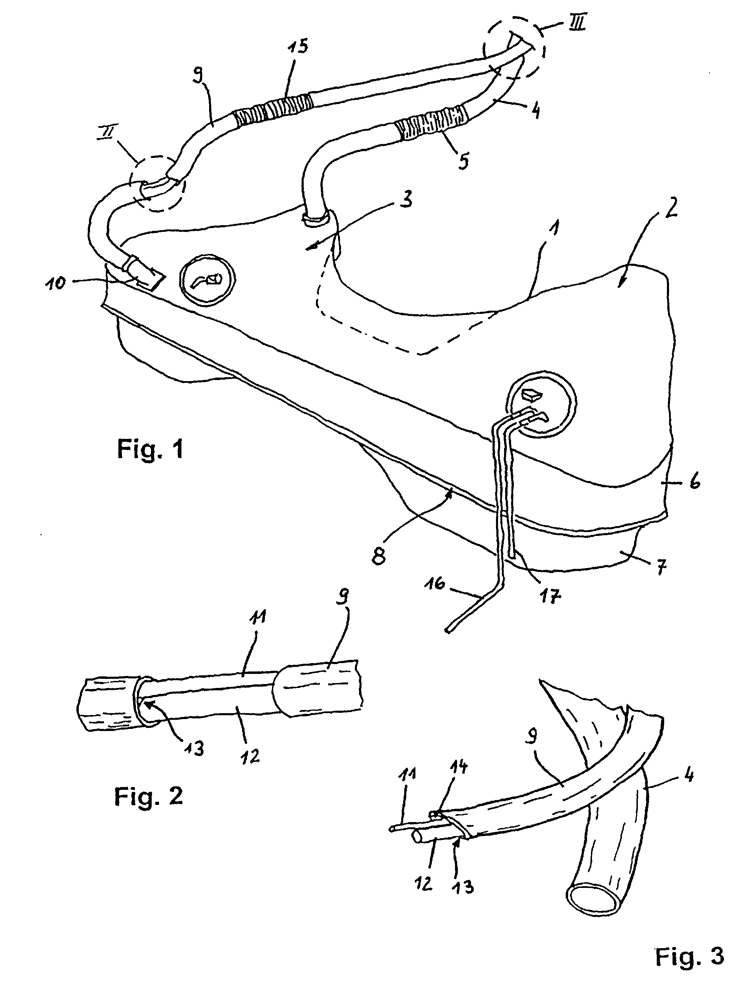

In der Figur 1 ist eine Kraftstoffversorgungsanlage dargestellt mit einem Kraftstoffbehälter 1 in Form eines sogenannten Mehrkammertanks (z.B. Satteltank). Der Kraftstoffbehälter 1 weist zwei Kraftstoffkammern 2 bzw. 3 auf. Die Befüllung des Kraftstoffbehälters 1 erfolgt über ein Einfüllrohr 4 mit integriertem Dehnungsausgleicher 5.

Der Kraftstoffbehälter 1 besteht aus Metall und ist zweiteilig ausgeführt mit einer oberen Halbschale 6 und einer unteren Halbschale 7, welche entlang ihrer Stoßkante 8 aneinander gefügt sind.

Die Betriebsbelüftung und die Betankungsbelüftung des Kraftstoffbehälters 1 erfolgt über eine Mehrkanalleitung 9, die über einen Anschluss 10 in den Kraftstoffbehälter 1 geführt ist. In die Mehrkanalleitung 9 ist eine Betriebsbelüftungsleitung 11 und eine Betankungsbelüftungsleitung 12 integriert (siehe Figuren 2 und 3).

Die Betankungsbelüftungsleitung 12 dient zur Entlüftung des Kraftstoffbehälters 1 beim Tankvorgang. Um dem hierbei zu verdrängenden größeren Gasvolumen Rechnung zu tragen, ist der Querschnitt der Betankungsbelüftungsleitung 12 größer als der einer Betriebsbelüftungsleitung 11. Ferner dient die Betankungsbelüftungsleitung zur Begrenzung des Füllstands im Kraftstoffbehälter 1. Durch das Niveau bzw. die Höhenlage der Öffnung der Betankungsbelüftungsleitung 12 wird der Füllstand des Kraftstoffs im Kraftstoffbehälter 1 begrenzt und ein nicht betankbares Volumen (Ausgleichsvolumen) im Kraftstoffbehälter 1 sichergestellt.

Die Betriebsbelüftungsleitung 11 dient zur Be- bzw. Entlüftung der linken Kraftstoffkammer 2. Die Belüftung der rechten Kraftstoffkammer 3 erfolgt über den freien Querschnitt der Mehrkanalleitung 9 durch den verbleibenden Ringraum 13 zwischen der Betriebsbelüftungsleitung 11 und der Betankungsbelüftungsleitung 12 sowie der inneren Mantelfläche 14 der Mehrkanalleitung 9.

In die Mehrkanalleitung 9 ist ein Verschiebungsausgleicher 15 zur Kompensation von Verschiebunden und Längenänderungen im Betrieb eingegliedert. Ferner erkennt man in der Figur 1 eine Vorlaufleitung 16 zur Führung des Kraftstoffes zum Verbrennungsmotor sowie eine Leckstrom/Rückstromleitung 17 für nichtverbrauchten Kraftstoff.

Für den Anschluß 10 der Mehrkanalleitung 9 ist nur eine Öffnung im Kraftstoffbehälter 1 erforderlich. Über die Öffnung erfolgt dann sowohl die Betriebsbelüftung der beiden Kraftstoffkammern 2 und 3 durch die Betriebsbelüftungsleitung 11 und die Mehrkanalleitung 9 als auch die Betankungsbelüftung mittels der Betankungsbelüftungsleitung 12.

Vorteilhafterweise ist die Mehrkanalleitung 9 aus diffusionsfestem Metall. Hierdurch kann eine Permeation von Kraftstoffgas unterdrückt werden. An den Werkstoff der in der Mehrkanalleitung 9 verlaufenden Leitungen 11 und 12 sind demgegenüber geringe Anforderungen zu stellen.

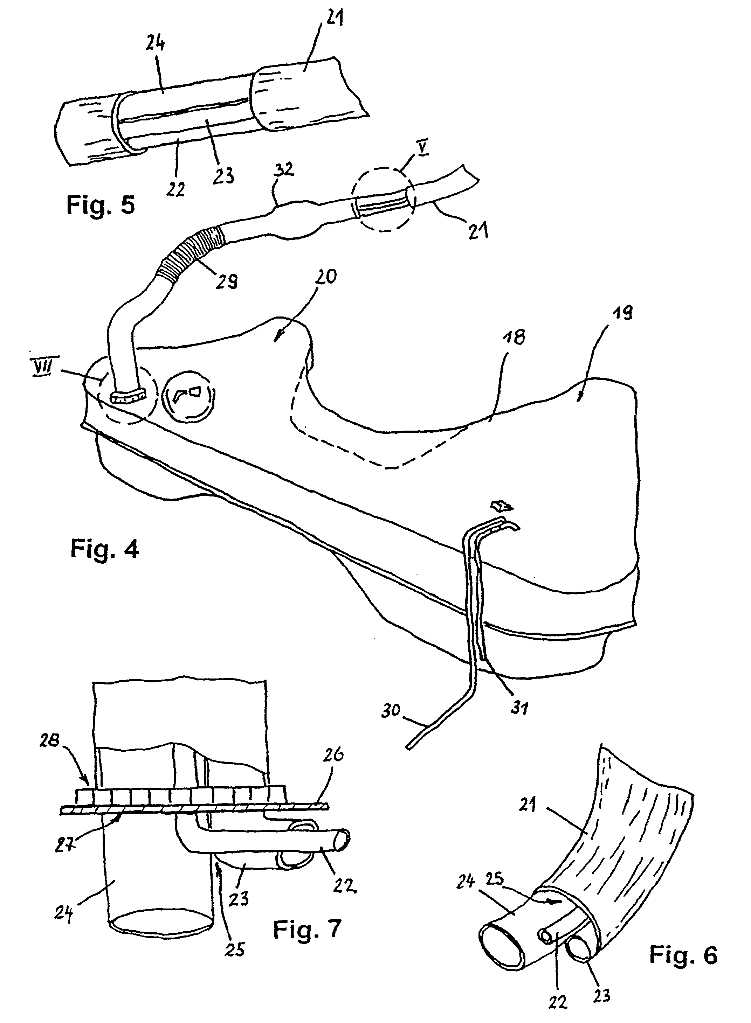

Die Figur 4 zeigt einen erfindungsgemäßen Kraftstoffbehälter 18 in Form eines Mehrkammertanks mit einer linken und einer rechten Kraftstoffkammer 19 bzw. 20.

An den Kraftstoffbehälter 18 ist eine erfindungsgemäße Mehrkanalleitung 21 angeschlossen, welche neben einer Betriebsbelüftungsleitung 22 und einer Betankungsbelüftungsleitung 23 auch ein Einfüllrohr 24 aufnimmt (siehe Figuren 5 und 6).

Die Be- bzw. Entlüftung der linken Kraftstoffkammer 19 erfolgt über die Betriebsbelüftungsleitung 22. Die Belüftung der rechten Kraftstoffkammer 20 erfolgt über den freien Querschnitt der Mehrkanalleitung 21 durch den Ringraum 25 zwischen der Betriebsbelüftungsleitung 22, der Betankungsbelüftungsleitung 23 und dem Einfüllrohr 24.

Die anschlussseitige Situation der Mehrkanalleitung 21 am Kraftstoffbehälter 18 wird anhand der Figur 7 deutlich.

In der Wand 26 des Kraftstoffbehälters 18 ist nur eine Öffnung 27 erforderlich mit einem Anschluss 28 für die Mehrkanalleitung 21. Durch die Mehrkanalleitung 21 werden das Einfüllrohr 24 sowie die Betriebsbelüftungsleitung 22 und die Betankungsbelüftungsleitung 23 in den Kraftstoffbehälter 21 geführt. Die Funktion einer weiteren Betriebsbelüftungsleitung 22 übernimmt die Mehrkanalleitung 21.

Mit 29 ist in der Figur 4 ein Dehnungsausgleicher bezeichnet. Die Vorlaufleitung und die Leckstromleitung tragen die Bezugszeichen 30 und 31.

Des Weiteren ist in die Mehrkanalleitung 21 einstückig ein Ausgleichsbehältnis 32 integriert. Das Ausgleichsbehältnis 32 ist durch vorzugsweise hydroformtechnische radiale Aufweitung der Wand der Mehrkanalleitung 21 gefertigt. Durch das Ausgleichsbehältnis 32 wird ein Ausgleichsvolumen geschaffen. Das Ausgleichsbehältnis 32 schafft ein Ausgleichsvolumen für die thermische Ausdehnung des Kraftstoffs im Kraftstoffbehälter 18. Des Weiteren können im Gasvolumenstrom mitgerissene Kraftstofftröpfchen im Ausgleichsbehältnis 32 abgeschieden werden.

### Bezugszeichenaufstellung

- 1 -: Kraftstoffbehäler
- 2 -: Kraftstoffkammer
- 3 -: Kraftstoffkammer
- 4 -: Einfüllrohr
- 5 -: Dehnungsausgleicher
- 6 -: obere Halbschale
- 7 -: untere Halbschale
- 8 -: Stoßkante
- 9 -: Mehrkanalleitung
- 10 -: Anschluss
- 11 -: Betriebsbelüftungsleitung
- 12 -: Betankungsbelüftungsleitung
- 13 -: Ringraum
- 14 -: innere Mantelfläche
- 15 -: Verschiebungsausgleicher
- 16 -: Vorlaufleitung
- 17 -: Leckstrom-/Rückstromleitung
- 18 -: Kraftstoffbehälter
- 19 -: Kraftstoffkammer
- 20 -: Kraftstoffkammer
- 21 -: Mehrkanalleitung
- 22 -: Betriebsbelüftungsleitung
- 23 -: Betankungsleitung
- 24 -: Einfüllrohr
- 25 -: Ringraum
- 26 -: Wand von 18
- 27 -: Öffnung in 26
- 28 -: Anschluss
- 29 -: Verschiebungsausgleicher
- 30 -: Vorlaufleitung
- 31 -: Leckstrom-/Rückstromleitung
- 32 -: Ausgleichsbehältnis

## Patentansprüche

1. Kraftstoffversorgungsanlage für Automobile mit einem Kraftstoffbehälter (1, 18), an den ein Einfüllrohr (4, 24) sowie mindestens eine Betriebsbelüftung (11, 22) und eine Betankungsbelüftung (12, 23) angeschlossen sind, wobei die Betriebsbelüftung (11, 22) und/oder die Betankungsbelüftung (12, 23) Bestandteil einer Mehrkanalleitung (9, 21) sind, **dadurch gekennzeichnet, dass** in die Mehrkanalleitung (21) ein Ausgleichsbehältnis (32) integriert ist.

2. Kraftstoffversorgungsanlage nach Anspruch 1, **dadurch gekennzeichnet, dass** das Einfüllrohr (24) in die Mehrkanalleitung (21) eingegliedert ist.

3. Kraftstoffversorgungsanlage nach Anspruch 1 oder 2, **dadurch gekennzeichnet, dass** in die Mehrkanalleitung (9, 21) ein Dehnungsausgleicher (15, 29) integriert ist.

## Claims

1. A fuel supply installation for motor vehicles, comprising a fuel container (1, 18) connected to a filling tube (4, 24) and to at least one operating aerator (11, 22) and a refuelling aerator (12, 23), wherein the operating aerator (11, 22) and/or the refuelling aerator (12, 23) are components of a multi-channel pipe (9, 21), **characterised in that** a compensating reservoir (32) is incorporated in the multi-channel pipe (21).

2. A fuel supply installation according to claim 1, **characterised in that** the filling tube (24) is incorporated in the multi-channel pipe (21).

3. A fuel supply installation according to claim 1 or 2, **characterised in that** an expansion compensator (15, 29) is incorporated in the multi-channel pipe (9, 21).

## Revendications

1. Système d'alimentation en carburant pour automobiles, comportant un réservoir de carburant (1, 18) auquel sont raccordées une tubulure d'emplissage (4, 24), ainsi qu'au moins une ventilation de fonctionnement (11, 22) et une ventilation d'approvisionnement (12, 23), ladite ventilation de fonctionnement (11, 22) et/ou ladite ventilation d'approvisionnement (12, 23) faisant partie intégrante d'un conduit (9, 21) à canaux multiples, **caractérisé par le fait qu'**un récipient de compensation (32) est intégré dans le conduit (21) à canaux multiples.

2. Système d'alimentation en carburant selon la revendication 1, **caractérisé par le fait que** la tubulure d'emplissage (24) est incorporée dans le conduit (21) à canaux multiples.

3. Système d'alimentation en carburant selon la revendication 1 ou 2, **caractérisé par le fait qu'**un compensateur d'expansion (15, 29) est intégré dans le conduit (9, 21) à canaux multiples.
